# EUROPÄISCHE PATENTANMELDUNG

(11) **EP 4 635 292 A1**
(43) Veröffentlichungstag der Anmeldung: **22.10.2025**
(21) Anmeldenummer: 24171271.0
(22) Anmeldetag: 19.04.2024
(51) Int. Cl.: A01G 24/22

(54) **TORFERSATZ-KULTURSUBSTRAT SOWIE VERFAHREN ZU SEINER HERSTELLUNG**

(71) Anmelder: Aumann, Franz, 49661 Cloppenburg (DE)
(72) Erfinder: Aumann, Franz, 49661 Cloppenburg (DE)
(74) Vertreter: Jabbusch, Matthias

(57) **Zusammenfassung**

Ein Torfersatz-Kultursubstrat für saure Böden hebende Pflanzen besteht aus einer verschiedene Schüttgüter aufweisenden fermentierten Schüttgutmischung. Wenigstens eines der Schüttgüter ist ein zerkleinerter Heidekrautschnitt. Wenigstens ein anderes der Schüttgüter ist ein zerkleinertes pflanzliches Ausgleichsmaterial. welches wie das Heidekraut (1) ebenfalls Verholzungen aufweist, jedoch weniger Bitter- und Gerbstoffe als Heidekraut (1) hat. Zum Herstellen des Torfersatz-Kultursubstrats werden die verschiedenen Schüttgüter zu einer Schüttgutmischung miteinander vermengt und die Schüttgutmischung (11) durchläuft eine Fermentation.

## Beschreibung

Die Erfindung betrifft ein Torfersatz-Kultursubstrat für saure Böden liebende Pflanzen, aus einer verschiedene Schüttgüter aufweisenden fermentierten Schüttgutmischung. Außerdem betrifft die Erfindung ein Verfahren zum Herstellen eines Torfersatz-Kultursubstrates für saure Böden liebenden Pflanzen, bei dem verschiedene Schüttgüter zu einer Schüttgutmischung miteinander vermengt werden, und die Schüttgutmischung eine Fermentation durchläuft.

Mit dem Klimaschutzprogramm 2030 hat sich die Bundesregierung dazu verpflichtet, darauf hinzuwirken, dass im Freizeitgartenbau bereits bis 2026 nahezu vollständig auf den Einsatz von Torf verzichtet wird, und dass im Erwerbsgartenbau bis 2030 ein weitgehender Ersatz von Torf stattfinden wird. Dazu bedarf es der Entwicklung von Torfersatz-Kultursubstraten, die dazu geeignet sind, saure Böden liebende Pflanzen, wie Heide, Rhododendren, Azaleen und viele Beerensträucher auch weiterhin problemlos und kostengünstig kultivieren zu können. Es wurde bereits experimentiert, Komposterden mit Schwefel- oder Zitronensäure anzusäuern. Diese Ansäuerung ist aber nicht beständig genug, um den Pflanzen damit dauerhaft ein saures Bodenmilieu zu bieten. Eine Ansäuerung von Torfersatzstoffen mit Schwefelblüte wird beispielsweise in der internationalen Anmeldeschrift WO 99/57079 sowie in der deutschen Offenlegungsschrift DE10 2021 117 656 A1 beschrieben.

Der Erfindung liegt die Aufgabe zugrunde, ein Torfersatz-Kultursubstrat der eingangs genannten Gattung aufzuzeigen, dessen Eignung für die Kultivierung von saure Böden liebenden Pflanzen nicht hinter der eines Torfkultursubstrates zurücksteht.

Diese Aufgabe ist durch ein Torfersatz-Kultursubstrat mit den Merkmalen des Patentanspruches 1 sowie durch ein Verfahren zur Herstellung des Torfersatz-Kultursubstrates mit den Merkmalen des Patentanspruches 7 gelöst. Vorteilhafte Weiterbildungen der Erfindung sind in den jeweils auf diese Patentansprüche rückbezogenen Unteransprüchen angegeben.

Das erfindungsgemäße Torfersatz-Kultursubstrat zeichnet sich dadurch aus, dass wenigstens eines der Schüttgüter ein zerkleinerter Heidekrautschnitt ist. Heidekraut enthält antiseptisch wirkende Bitterstoffe und Gerbstoffe, die in dem erfindungsgemäßen Torfersatz-Kultursubstrat Schimmelbildung verhindern und für einen vorteilhaft niedrigen pH-Wert, vorzugsweise einen pH-Wert zwischen 3 und 5, sorgen. Dabei ermöglicht der feingliedrige Aufbau von Heidekrautgewächsen eine vorteilhaft einfache und kostengünstige Zerkleinerung des Heidekrautschnittes zu einem für das erfindungsgemäße Torfersatz-Kultursubstrat geeigneten Schüttgut. Zudem fällt Heidekrautschnitt bei den Pflegeschnitten unserer Heidelandschaften in großen Mengen an, denn durch die Beweidung mit Schafen werden nur etwa 20% der allein in Deutschland vorhandenen 750.000 Hektar Heideflächen bewirtschaftet.

Um die bereits im Mittelalter entstandenen Heideflächen auch zukünftigen Generationen als Natur-Sehenswürdigkeiten erhalten zu können, sind umfangreiche Pflegemaßnahmen erforderlich, die jährlich Millionensummen verschlingen. Erschwerend kommt hinzu, dass es für den bei den Pflegemaßnahmen maschinell erzeugten Heidekrautschnitt kaum Verwertungsmöglichkeiten gibt, so dass der Heidekrautschnitt größtenteils kostenpflichtig verklappt werden muss. Für die an Reetdächern üblichen Zierhauben, für die Verarbeitung als Heilkraut oder für den Einsatz als Filtermaterial in Biofiltern werden nur kleinere Mengen an Heidekraut benötigt, welches überdies von besonderer Güte zu sein hat. Das bei den Pflegeschnitten anfallende Heidekraut kann diesen Güteerfordernissen nicht genügen.

Mit dem erfindungsgemäßen Torfersatz-Kultursubstrat ergibt sich für die Pflanzerdenindustrie eine vorteilhaft einfache Möglichkeit zum freiwilligen Verzicht auf torfhaltige Substrate, und für die unsere großen Heideflächen schützenden Institutionen eine vorteilhaft einfache Möglichkeit ihre Pflegekosten signifikant zu senken.

Nach einer ersten Weiterbildung der Erfindung ist wenigstens eines der Schüttgüter ein zerkleinertes pflanzliches Ausgleichsmaterial, welches wie das Heidekraut ebenfalls Verholzungen aufweist, jedoch weniger Bitter- und Gerbstoffe als Heidekraut hat. Sowohl der Verholzungen aufweisende Heidekrautschnitt als auch das Verholzungen aufweisende Ausgleichsmaterial sind sogenannte Kohlenstoffspeicher. Ein pflanzliches Ausgleichsmaterial mit vergleichsweise niedrigem Gehalt an Bitter- und Gerbstoffen ist beispielsweise Chinaschilf, Schilfrohr oder Ast- und Zweigwerk aus Baumfäll- und Rodungsarbeiten. Das Schüttgut, welches aus dem Ausgleichsmaterial hergestellt ist, dient der Beimengung zum Heidekrautschnitt und ermöglicht so die Herstellung des erfindungsgemäßen Torfersatz-Kultursubstrates mit einem vorbestimmten pH-Wert.

Nach einer nächsten Weiterbildung der Erfindung ist wenigstens eines der Schüttgüter ein organischer Stickstoffträger. Für die Schüttgutmischung besonders geeignete Stickstoffträger sind beispielsweise die Gärreste aus Biogasanlagen oder die Mist- und Güllefraktionen aus Tierställen. Es liegt jedoch im Rahmen der Erfindung, wenn als Stickstoffträger hochwertige organische Düngemittel zum Einsatz kommen, beispielsweise Hornmehl, Knochenmehl, Fischmehl oder Guano.

Nach einer weiteren Weiterbildung der Erfindung ist wenigstens eines der Schüttgüter ein zerkleinertes Mineralgestein. Das Mineralgestein bewirkt die Anreicherung des Torfersatz-Kultursubstrates mit Mineralstoffen und Spurenelementen und verbessert damit das Pflanzenwachstum. Außerdem verbessert die Beimengung von Mineralgestein die Wasser- und Luftdurchlässigkeit des Torfersatz-Kultursubstrates. Geeignetes Mineralgestein ist beispielsweise Urgestein, Perlite, vulkanische Zeolithe, Tonstein oder Quarzit.

Da die Heidelandschaften Nordeuropas fast ausschließlich mit der Besenheide *Calluna vulgaris bewachsen* sind, enthält der Heidekrautschnitt hauptsächlich die Zweige der Besenheide. In feuchteren Senken ist in den Heidelandschaften die Glockenheide *Erika tetralix* anzutreffen, so dass der Heidekrautschnitt insbesondere auch Zweige der Glockenheide enthalten kann. Andere im nördlichen Europa beheimatete Heidekrautarten haben für das erfindungsgemäße Torfersatz-Kultursubstrat keinerlei Bedeutung, weil sie in zu kleinen Beständen vorkommen.

Das erfindungsgemäße Verfahren zeichnet sich dadurch aus, dass ein Heidekrautschnitt zu wenigstens einem der Schüttgüter zerkleinert wird. Die Zerkleinerung bewirkt vorteilhaft die Freisetzung antiseptisch wirkender Bitter- und Gerbstoffe, die in dem erfindungsgemäßen Torfersatz-Kultursubstrat Schimmelbildung verhindern und für einen vorteilhaft niedrigen pH-Wert, vorzugsweise einen pH-Wert zwischen 3 und 5, sorgen. Der feingliedrige Aufbau der Heidekrautgewächse ermöglicht eine problemlose Zerkleinerung in Häckslern, Schreddern oder anderen Zerkleinerungsmaschinen, wie sie beispielsweise in Torfwerken oder Kompostierwerken zum Einsatz kommen. Ein für die Verwendung in dem erfindungsgemäßen Torfersatz-Kultursubstrat besonders geeigneter Heidekrautschnitt ist Heidekrautschnitt aus den Pflegeschnitten unserer großen bekannten Heidelandschaften. Mit der erfindungsgemäßen Verwendung entgeht er einer kostenträchtigen Verklappung und wird stattdessen einer gewinnbringenden Verarbeitung im erfindungsgemäßen Torfersatz-Kultursubstrat zugeführt. Da sich das erfindungsgemäße Torfersatz-Kultursubstrat und die bekannten Torfsubstrate als gleichwertig erweisen, ist die Erfindung ein unverzichtbarer Beitrag zur Finanzierung der Pflege unserer Heidelandschaften sowie zur Finanzierung von Renaturierungsmaßnahmen an unseren entwässerten Hochmoorflächen.

Nach einer ersten Weiterbildung des erfindungsgemäßen Verfahrens wird ein pflanzliches Ausgleichsmaterial, welches wie das Heidekraut Verholzungen aufweist, jedoch weniger Bitter- und Gerbstoffe als Heidekraut enthält, zu wenigstens einem der Schüttgüter zerkleinert. Sowohl der Heidekrautschnitt als auch das Ausgleichsmaterial fungieren als Kohlenstoffspeicher. Da das pflanzliche Ausgleichsmaterial jedoch vorzugsweise erheblich weniger Bitter- und Gerbstoffe als das Heidekraut aufweist, kann der pH-Wert des erfindungsgemäßen Torfersatz-Kultursubstrates mit dem Mischungsverhältnis von Heidekrautschnitt und Ausgleichsmaterial genau eingestellt werden.

Nach einer nächsten Weiterbildung der Erfindung wird ein organischer Stickstoffträger zu wenigstens einem der Schüttgüter verarbeitet. Für die Schüttgutmischung besonders geeignete Stickstoffträger sind beispielsweise die Gärreste aus Biogasanlagen oder Mist- und Güllefraktionen aus Tierställen. Dabei umfasst die Verarbeitung mindestens eine Zerkleinerungsstufe, mit der eine Homogenisierung zu einem gut rieselfähigen Schüttgut erfolgt. Zusätzlich kann die Verarbeitung Trocknungs- oder Sterilisierungsprozesse umfassen.

Um den für die Fermentation benötigten Mikroorganismen bestmögliche Lebensbedingungen zu bieten, wird die aus den Schüttgütern hergestellte Schüttgutmischung auf einen Trockensubstanzgehalt von 70- bis 80 % gebracht. Dazu werden die Trockensubstanzgehalte der verschiedenen Schüttgüter vorzugsweise noch von ihrer Vermengung zu der Schüttgutmischung in separaten Trocknungsprozessen einander angeglichen. Die Angleichung der Trocken-substanzgehalte gewährleistet eine gute Durchmischung der verschiedenen Schüttgüter innerhalb ihrer Schüttgutmischung.

Um das Risiko zu reduzieren, das bei der Fermentation unerwünschte Nebenprodukte entstehen, wird der Schüttgutmischung wenigstens eine Fermentationshilfe zugesetzt. Eine besonders geeignete Fermentationshilfe ist das Produkt "Texas Ferm Kultur 2000" von der Texas Bio-Energy GmbH & Co. KG. Das bei der Fermentation entstehende Biogas kann aufgefangen werden und daraus unter Abscheidung von Kohlendioxid Biomethan erzeugt werden. Das Biomethan kann dann vorteilhaft als Energiequelle zur Durchführung des erfindungsgemäßen Verfahrens genutzt werden.

Um die Kosten zum Herstellen des erfindungsgemäßen Torfersatz-Kultursubstrates so gering wie möglich zu halten, ist vorgesehen, dass der Heidekrautschnitt aus den in unseren nordeuropäischen Heidegebieten durchgeführten Pflegeschnitten beschafft wird. Für die bei den Pflegeschnitten anfallenden Mengen an Heidekrautschnitt gibt es bisher kaum eine Verwendungsmöglichkeit, so dass dieser kostengünstig in großen Mengen beschaffbar ist.

Nach einer nächsten besonders vorteilhaften Weiterbildung des erfindungsgemäßen Verfahrens wird das pflanzliche Ausgleichsmaterial als Streckmittel für den Heidekrautschnitt eingesetzt, wobei der pH-Wert der fermentierten Schüttgutmischung durch Variieren des Mengenverhältnisses von Ausgleichsmaterial zu Heidekrautschnitt eingestellt wird. Somit kann das erfindungsgemäße Torfersatz-Kultursubstrat auch dann in gleichbleibender Qualität hergestellt werden, wenn dafür verwendeter Heidekrautschnitt von Charge zu Charge mit anderem pflanzlichen Material unterschiedlich verunreinigt ist. Eine gleichbleibende Qualität ist für das erfindungsgemäße Torfersatz-Kultursubstrat schließlich von einiger Bedeutung, wenn dieses im gewerblichen Pflanzenbau den Einsatz von Torfsubstraten erfolgreich verdrängen soll.

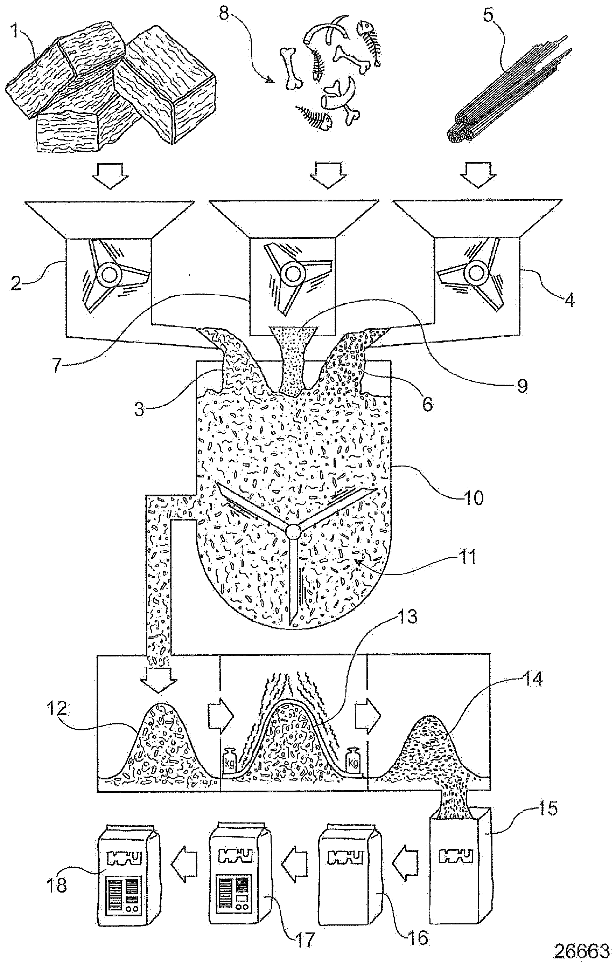

Ein Ausführungsbeispiel der Erfindung, aus dem sich weitere erfinderische Merkmale ergeben, ist in der Zeichnung dargestellt.

Die einzige Figur zeigt eine schematische Darstellung des Verfahrens zum Herstellen eines Torfersatz-Kultursubstrats für saure Böden liebende Pflanzen. In Ballen verpresstes Heidekraut 1 wird in einer ersten Messermühle 2 zu Heidekrautschnitt 3 zerkleinert. In einer zweiten Messermühle 4 wird Schilfrohr 5 zu Schilfrohrschnitt 6 zerkleinert und in einer dritten Messermühle 7 werden tierische Horn- und Knochenabfälle 8 zu einem rieselfähigen Düngemittel 9 zerkleinert. In einem den Messermühlen 2, 4, 7 nachgeschalteten Mischer 10 werden der Heidekrautschnitt 3, der Schilfrohrschnitt 6 sowie das Düngemittel 9 zu einer Schüttgutmischung 11 miteinander vermengt. Sodann wird die Schüttgutmischung 11 zu einer Miete 12 angehäuft und unter einer Kunststofffolie 13 einem drei bis sechs Monate andauernden Fermentationsprozess ausgesetzt. Die fermentierte Schüttgutmischung 14 wird in Kunststoffsäcke 15 abgefühlt, die Kunststoffsäcke 15 werden verschlossen, die verschlossenen Kunststoffsäcke 16 erhalten Chargennummern und die nummerierten Kunststoffsäcke 17 gehen schließlich als handelsverfügbare Ware 18 in den Verkauf.

## Patentansprüche

1. Torfersatz-Kultursubstrat für saure Böden liebende Pflanzen, aus einer verschiedene Schüttgüter aufweisenden fermentierten Schüttgutmischung (14),
**dadurch gekennzeichnet,**
**dass** wenigstens eines der Schüttgüter ein zerkleinerter Heidekrautschnitt (3) ist.

2. Torfersatz-Kultursubstrat nach Anspruch 1, **dadurch gekennzeichnet, dass** wenigstens eines der Schüttgüter ein zerkleinertes pflanzliches Ausgleichsmaterial ist, welches wie das Heidekraut (1) ebenfalls Verholzungen aufweist, jedoch weniger Bitter- und Gerbstoffe als Heidekraut (1) hat.

3. Torfersatz-Kultursubstrat nach Anspruch 2, **dadurch gekennzeichnet, dass** das Schüttgut, welches aus dem Ausgleichsmaterial hergestellt ist, ein zerkleinerter Schilfrohrschnitt (6) ist.

4. Torfersatz-Kultursubstrat nach einem der Ansprüche 1 bis 3, **dadurch gekennzeichnet, dass** wenigstens eines der Schüttgüter ein organischer Stickstoffträger ist.

5. Torfersatz-Kultursubstrat nach einem der Ansprüche 1 bis 4, **dadurch gekennzeichnet, dass** wenigstens eines der Schüttgüter ein zerkleinertes Mineralgestein ist.

6. Torfersatz-Kultursubstrat nach einem der Ansprüche 1 bis 5, **dadurch gekennzeichnet, dass** der Heidekrautschnitt (3) hauptsächlich Zweige der Besenheide Calluna vulgaris enthält.

7. Verfahren zum Herstellen eines Torfersatz-Kultursubstrats für saure Böden liebende Pflanzen, bei dem verschiedene Schüttgüter zu einer Schüttgutmischung (11) miteinander vermengt werden, und die Schüttgutmischung (11) eine Fermentation durchläuft,
**dadurch gekennzeichnet,**
**dass** ein Heidekrautschnitt (3) zu wenigstens einem der Schüttgüter zerkleinert wird.

8. Verfahren nach Anspruch 7, **dadurch gekennzeichnet, dass** ein pflanzliches Ausgleichsmaterial, welches wie das Heidekraut (1) Verholzungen aufweist, jedoch weniger Bitter- und Gerbstoffe als Heidekraut (1) enthält, zu wenigstens einem der Schüttgüter zerkleinert wird.

9. Verfahren nach Anspruch 7 oder 8, **dadurch gekennzeichnet, dass** ein organischer Stickstoffträger zu wenigstens einem der Schüttgüter verarbeitet wird.

10. Verfahren nach einem der Ansprüche 7 bis 9, **dadurch gekennzeichnet, dass** die aus den Schüttgütern hergestellte Schüttgutmischung (11) auf einen Trockensubstanzgehalt von 70-80 % gebracht wird.

11. Verfahren nach einem der Ansprüche 7 bis 10, **dadurch gekennzeichnet, dass** der Schüttgutmischung (11) wenigstens eine Fermentationshilfe zugesetzt wird.

12. Verfahren nach einem der Ansprüche 7 bis 11, **dadurch gekennzeichnet, dass** der Heidekrautschnitt (3) aus den in unseren nordeuropäischen Heidegebieten durchgeführten Pflegeschnitten beschafft wird.

13. Verfahren nach einem der Ansprüche 7 bis 12, **dadurch gekennzeichnet, dass** das pflanzliche Ausgleichsmaterial als Streckmittel für den Heidekrautschnitt (3) eingesetzt wird, und dass der pH-Wert der fermentierten Schüttgutmischung (14) durch Variieren des Mengenverhältnisses von Ausgleichsmaterial zu Heidekrautschnitt (3) eingestellt wird.
